# EUROPEAN PATENT APPLICATION

(11) **EP 2 377 642 A1**
(43) Date of publication of application: **19.10.2011**
(21) Application number: 09833412.1
(22) Date of filing: 14.12.2009
(51) Int. Cl.: B23K 37/00, B23K 26/08, B23K 26/10, B23K 26/20, B23K 26/38, B23K 37/04, B23Q 7/02

(54) **WELDING APPARATUS AND METHOD OF WELDING USING THE APPARATUS**

(30) Priority: 16.12.2008 JP 2008319460; 16.12.2008 JP 2008319461; 18.12.2008 JP 2008322503
(71) Applicant: IHI Corporation, Tokyo 135-8710 (JP)
(72) Inventor: MAENO, Jun, Tokyo 135-8710 (JP)
(74) Representative: Epping - Hermann - Fischer
(86) International application number: PCT/JP2009/070834
(87) International publication number: WO 2010/071109

(57) **Abstract**

A welding apparatus includes a table (18) on which first, second and third blanks are to be fixed, a first positioning station (2) where the first and second blanks (B1, B2) are fixed on the table, a first welding station (4) where the first and second blanks (B1, B2) are welded together at their abutting surfaces, a cutting station (6) where the abutting surface of the first or second blank or both is cut into a predetermined shape, a second positioning station (8) where the third blank (B3) is fixed on the table (18), and a second welding station (10) where the third blank and the first or second blank or the first and second blanks are welded together at their abutting surfaces.

## Description

### Technical Field

The present invention relates to a welding apparatus for welding a plurality of blanks together and a welding method using the welding apparatus.

### Background Art

The applicant hereof is currently in the process of developing a welding apparatus which is similar in some respects to the welding apparatus disclosed in Patent Document 1 identified below and in which first and second blanks are welded together by butt welding and then a third blank is welded to the first or second blank or to both of the first and second blanks by butt welding.

Also, the applicant is in the process of developing an improved welding apparatus over the one disclosed in Patent Document 1, wherein a plurality of blanks are fixed in position on a table at a positioning station, then the table with the blanks fixed thereon is moved to a welding station where the blanks fixed on the table are welded together, and the table with the welded blanks thereon is moved to an unloading station. In the improved welding apparatus, the processes of the respective stations are simultaneously performed, to thereby shorten the cycle time for welding.

The applicant is currently developing a further improved laser welding apparatus over the one disclosed in Patent Document 1, which is equipped with a positioning station and a welding station, and in which a plurality of blanks are positioned and fixed on a table at the positioning station, and then the table on which the blanks are positioned and fixed is moved to the welding station where the blanks are subjected to laser welding. In this improved laser welding apparatus, while the welding operation is performed at the welding station, the positioning and fixing of another set of blanks on another table is simultaneously executed at the positioning station, to enhance the operation rate of the laser welding apparatus, that is, to shorten the welding cycle time.

### Prior Art Literature

### Patent Document

Patent Document 1: Japanese Laid-open Patent Publication **No.** 08-290282

### Summary of the Invention

### Problems to be Solved by the Invention

When butt welding is performed in the aforementioned manner, it is occasionally the case that the third blank fails to be properly butted against the second blank due to dimensional error of the first or second blank or positioning error of the second blank relative to the first blank. In such cases, a problem arises in that satisfactory weld quality is not achieved.

Where the stations of the welding apparatus are arranged in a straight line, a long return line is required to return the table to the first station after the process of the last station is finished. It is also necessary that in view of the processing cycle, the individual tables should be moved at high speed along the return line. Further, since the tables need to be moved one by one, complicated devices as well as complicated control are required for transferring the individual tables. Especially in cases where the number of stations is large, for example, where a plurality of welding stations are provided with a view to performing the welding operation in multiple stages, the need for complicated transfer devices and for sophisticated control imposes substantial restrictions on the welding apparatus.

Also, where plate-like blanks are butted against each other and the abutting surfaces thereof are joined by laser welding, it is necessary that the blanks should be precisely butted against each other and be fixed in an accurate position with respect to the laser welding device.

Thus, in the welding apparatus of the aforementioned type, it is essential that the blanks should be accurately positioned and fixed on the table, and also that as few obstacles as possible, except the blanks, should exist on the table in order to ensure that such obstacles do not interfere with surrounding devices including the welding head when the table is moved or that the laser welding is completed by simple movement of the welding head.

The present invention was created in view of the above circumstances, and an object thereof is to provide a welding apparatus whereby first, second and third blanks to be subjected to butt welding can be properly butted against each other to attain improved weld quality, and a welding method using the welding apparatus.

The present invention provides a welding apparatus which does not require a long return line like the aforementioned one and which also makes it possible to simplify transfer devices for moving individual tables as well as the control for such movement.

Further, the present invention provides a welding apparatus which is configured such that blanks can be accurately positioned and fixed on the table and also that as few obstacles as possible, except the blanks, exist on the table.

### Means for Solving the Problems

According to claim 1, there is provided a welding apparatus for welding a first blank and a second blank to each other by butt welding to form a blank assembly, and then welding the blank assembly and a third blank to each other by butt welding. The welding apparatus comprises: a table on which the first, second and third blanks are to be fixed; and a plurality of stations where the table is to be positioned. The stations include a first positioning station where the first and second blanks placed on the table are positioned by being butted against each other, and then fixed on the table, a first welding station where the first and second blanks fixed on the table are welded together at abutting surfaces thereof, to form the blank assembly, a cutting station where the blank assembly is subjected to cutting to form an abutting surface with a predetermined shape against which the third blank is to be butted, a second positioning station where the third blank is positioned by being butted against the abutting surface of the blank assembly, and then fixed on the table, thus forming a blank aggregate, and a second welding station where the blank assembly and the third blank forming the blank aggregate are welded together at the abutting surfaces thereof, to form a finished article.

According to claim 2, in the welding apparatus of claim 1, the first positioning station, the first welding station, the cutting station, the second positioning station and the second welding station are arranged in mentioned order, the table is allotted to each of the stations, processes for positioning, welding and cutting the blanks are executed in parallel at the respective stations, and when the processes of the respective stations are completed, the tables are individually moved to next ones of the stations.

According to claim 3, in the welding apparatus of claim 2, after the finished article is unloaded from the table, the table is moved to the first positioning station.

According to claim 4, the welding apparatus of claim 3 further comprises an unloading station arranged between the second welding station and the first positioning station, for unloading the finished article.

According to claim 5, a welding method using the welding apparatus of claim 1 is provided, which comprises: the step, executed at the first positioning station, of positioning and fixing the first blank on the table, positioning the second blank by butting the second blank against the first blank, and fixing the second blank on the table; the step, executed at the first welding station, of welding the first and second blanks together at the abutting surfaces thereof to form the blank assembly; the step, executed at the cutting station, of subjecting the blank assembly to cutting to form the abutting surface with the predetermined shape against which the third blank is to be butted; the step, executed at the second positioning station, of positioning the third blank by butting the third blank against the abutting surface of the blank assembly, and fixing the third blank on the table, thus forming the blank aggregate; and the step, executed at the second welding station, of welding the blank assembly and the third blank forming the blank aggregate at the abutting surfaces thereof, to form the finished article.

A welding apparatus according to claim 6 comprises: a plurality of tables for carrying thereon a plurality of blanks to be welded together; a rotary platform on which the tables are arranged in a circle at an equal pitch; and a plurality of stations arranged below the rotary platform and including a positioning station for positioning and fixing the blanks and a plurality of processing stations for processing the blanks, wherein the positioning station and the plurality of processing stations are arranged at a pitch equal to the pitch at which the tables are arranged, a process of the positioning station for fixing the blanks in position on the table and processes of the plurality of processing stations for processing the blanks are executed in parallel, and after the processes of the respective stations are completed, the rotary platform is rotated to move the tables successively to next ones of the stations so that the blanks may be processed at the next stations.

According to claim 7, in the welding apparatus of claim 6, the rotary platform has a hole in a center thereof such that the rotary platform is shaped like a doughnut as viewed in plan, and each of the processing stations is provided with an outer post set up outward of the rotary platform, an inner post set up in the hole of the rotary platform, a guide member extending between the outer and inner posts, a slider movable along the guide member, and a laser head supported on the slider and capable of emitting a laser beam onto the blanks.

According to claim 8, in the welding apparatus of claim 7, the laser head is one of a head movable in a vertical direction as well as in a direction intersecting with a moving direction of the slider, a head configured to weld the blanks, and a head configured to cut the blank.

According to claim 9, in the welding apparatus of claim 6, each of the tables includes a positioning stopper for positioning the blank by allowing the blank to come into contact therewith, a push member for pushing the blank so as to come into contact with the positioning stopper, and a fixing device for fixing the positioned blank on the table, and the positioning station includes an actuator capable of engaging with the push member to drive the push member.

According to claim 10, in the welding apparatus of claim 9, the positioning station includes a positioning station base capable of moving up and down under the table, and the actuator is fixed on the positioning station base. When the positioning station base is in an elevated position, the actuator and the push member engage with each other, and when the positioning station base is in a lowered position, engagement between the actuator and the push member is released.

Also, in the welding apparatus of claim 10, the positioning stopper may be configured to be movable between an active position in which the positioning stopper projects above the table to allow the blank to abut thereagainst, and a rest position in which the positioning stopper is lowered beneath an upper surface of the table, and the positioning station may be provided with a stopper actuator capable of engaging with the positioning stopper to move the positioning stopper.

According to claim 11, the welding apparatus of claim 6 further comprises an unloading station arranged generally side by side with the positioning station and the plurality of processing stations, for unloading the blanks on which the processes of the respective processing stations have been performed.

According to claim 12, the welding apparatus of claim 6 further comprises an additional positioning station arranged between the plurality of processing stations, for positioning and fixing a blank different from the blanks.

According to claim 13, there is provided a welding apparatus for butting a first blank and a second blank against each other and welding the first and second blanks together at abutting surfaces thereof. The welding apparatus comprises: a table on which the first and second blanks are to be fixed; and a plurality of stations where the table is to be positioned. The stations include a positioning station where the first and second blanks are positioned by being butted against each other, and then fixed on the table, and a welding station where abutting surfaces of the first and second blanks on the table moved from the positioning station are subjected to laser welding by a welding device. The table includes a positioning stopper movable between an active position in which the positioning stopper projects above the table to allow the abutting surface of the first blank to abut thereagainst and a rest position in which the positioning stopper is lowered beneath an upper surface of the table, a first push member for pushing the first blank so that the abutting surface of the first blank may abut against the positioning stopper in the active position, a first magnet clamp arranged on the table, for attracting a lower surface of the first blank butted against the positioning stopper, a second push member for pushing the second blank while the first blank is attracted to the first magnet clamp with the positioning stopper moved to the rest position, so that the abutting surface of the second blank may be butted against the abutting surface of the first blank, and a second magnet clamp arranged on the table, for attracting a lower surface of the second blank butted against the first blank.

According to claim 14, in the welding apparatus of claim 13, the welding device includes a laser head movable along the abutting surfaces of the first and second blanks and capable of emitting a laser beam onto the abutting surfaces.

According to claim 15, in the welding apparatus of claim 13, one of the first and second magnet clamps includes a plurality of magnet clamps.

According to claim 16, in the welding apparatus of claim 13, a third blank whose basic shape corresponds to a mirror-image form of the first blank and a fourth blank whose basic shape corresponds to a mirror-image form of the second blank can be butted against each other and fixed on the table, in place of the first and second blanks, and the welding device is capable of welding the third and fourth blanks together at abutting surfaces thereof.

According to claim 17, in the welding apparatus of claim 16, one of the first and second magnet clamps provided on the table is capable of attracting part of the third or fourth blank, and the table is provided with a magnet clamp separate from the first and second magnet clamps and capable of attracting the third or fourth blank.

According to claim 18, in the welding apparatus of claim 16, the abutting surface of the third blank is butted against one of the positioning stopper and an additional positioning stopper provided on the table.

According to claim 19, in the welding apparatus of claim 18, the third blank is pushed by one of the first push member and an additional push member provided on the table so that the abutting surface of the third blank may be butted against one of the positioning stopper and the additional positioning stopper.

According to claim 20, in the welding apparatus of claim 18, the fourth blank is pushed by one of the second push member and an additional push member provided on the table so that the abutting surface of the fourth blank may be butted against the abutting surface of the third blank.

### Advantageous Effects of the Invention

In the welding apparatus according to claim 1, first, at the first positioning station, the first and second blanks are fixed in position on the table. Then, at the first welding station, the first and second blanks are welded together to form the blank assembly. Further, at the cutting station, the blank assembly is subjected to cutting to form an abutting surface with a predetermined shape against which the third blank is to be butted. Accordingly, the third blank can be butted with high accuracy against the blank assembly (the first or second blank or both the first and second blanks) at the second positioning station, despite dimensional errors of the first and second blanks or error caused during the butt welding of the first and second blanks. This permits the blank assembly and the third blank to be properly welded together at the subsequent second welding station, making it possible to improve weld quality.

In the welding apparatus according to claim 2, the stations are arranged in order, and the table is allotted to each of the stations. The stations execute their respective processes in parallel, and when the processes of the respective stations are completed, the tables are individually moved to their respective next stations. The cycle time for processing the blanks can therefore be shortened.

In the welding apparatus according to claim 3, after the finished article is unloaded from the table, the table is returned to the first positioning station. Thus, the tables are each circulated among the stations, so that the number of required tables can be minimized.

In the welding apparatus according to claim 4, the unloading station for unloading the finished article is arranged subsequently to the second welding station. Since the unloading station is used exclusively for the unloading process, sufficient time can be spared for unloading the finished article.

In the welding method according to claim 5, first, at the first positioning station, the first and second blanks are fixed in position on the table, and then at the first welding station, the first and second blanks are welded together to form the blank assembly. Subsequently, at the cutting station, the blank assembly is subjected to cutting to form an abutting surface with a predetermined shape against which the third blank is to be butted. Thus, the third blank can be highly accurately butted against the blank assembly (the first or second blank or both the first and second blanks) at the second positioning station, despite dimensional errors of the first and second blanks or error caused during the butt welding of the first and second blanks. This permits the blank assembly and the third blank to be properly welded together at the subsequent second welding station, thus improving the weld quality.

In the welding apparatus according to claim 6, the process of the positioning station for fixing the blanks in position on the table and the processes of the respective processing stations for processing the blanks are executed in parallel, and therefore, the overall cycle time from the positioning of the blanks to the completion of the final process can be shortened. Also, since the stations are arranged in a circle, it is unnecessary to provide a long return line for returning the tables from the last station to the first station. Further, the tables are arranged on the rotary platform at a pitch equal to the pitch at which the stations are arranged, and after the processes of the respective stations are completed, the rotary platform is rotated by an angle corresponding to the pitch, so that the tables are moved to the next stations, respectively. It is therefore possible to significantly simplify transfer devices for moving the tables as well as the control for such movement.

In the welding apparatus according to claim 7, the rotary platform is in the form of a doughnut, and each guide member supporting the laser head is supported at opposite ends by the inner and outer posts so as to extend across the table for processing the blanks. Since the guide member is thus securely supported at opposite ends, the movably supported laser head can be accurately moved along a desired path without deviating from the path. Moreover, even in cases where similar laser heads are used at the multiple processing stations, the guide members do not interfere with each other.

In the welding apparatus according to claim 8, the laser head is movable in the vertical direction as well as in a direction intersecting with the moving direction of the slider. The laser head can therefore emit a laser beam properly and accurately along a portion of the blanks requiring irradiation of the laser beam.

The laser head may be a head configured to weld the blanks, and in this case, the laser head is capable of welding the blanks to each other.

The laser head may alternatively be a head configured to cut the blank. In this case, the laser head is capable of cutting the blank.

In the welding apparatus according to claim 9, each of the tables is provided with a positioning stopper which allows the blank to come into contact therewith, and a push member for pushing the blank, while the positioning station is provided with an actuator for driving the push member. Since the actuator for driving the push member need not be provided for each of the tables, the number of required actuators can be minimized.

In the welding apparatus according to claim 10, the positioning station includes a positioning station base capable of moving up and down under the table, and the actuator is fixed on the positioning station base. When the positioning station base is in an elevated position, the actuator and the push member engage with each other, and when the positioning station base is in a lowered position, the engagement between the actuator and the push member is released. Thus, when executing the process for positioning the blanks, the positioning station base is elevated, whereupon the actuator becomes ready to drive the push member. After the positioning of the blanks is completed, the positioning station base is lowered, whereupon the engagement between the actuator and the push member is released, permitting the table to move together with the rotary platform.

Also, the blank can be positioned by being pushed by the push member so that the blank may abut against the positioning stopper in the active position. The blank is then fixed on the table by the fixing device, and the positioning stopper is moved to the rest position. Thus, when the table is moved to the processing station thereafter, the positioning stopper is already lowered and does not project above the table. At the processing station, therefore, the positioning stopper does not interfere with the welding or cutting process. Since the stopper actuator for moving the positioning stopper is arranged at the positioning station, moreover, it is unnecessary to provide the stopper actuator for each of the tables, making it possible to minimize the number of required actuators.

The welding apparatus according to claim 11 further comprises an unloading station for unloading the blanks on which the processes of the respective processing stations have been performed. The positioning station, the processing stations and the unloading station are arranged in a circle at an equal pitch. Thus, the process of the unloading station for unloading the finished article can be executed in parallel with the processes of the positioning station and the processing stations.

In the welding apparatus according to claim 12, an additional positioning station is arranged between the plurality of processing stations, for positioning and fixing an additional blank different from the above blanks. It is therefore possible to position and fix the additional blank relative to the above blanks and to process the blanks at the subsequent processing station.

At the positioning station of the welding apparatus according to claim 13, the positioning stopper is moved to the active position, then the first blank is pushed by the first push member so that the abutting surface of the first blank may be butted against the positioning stopper, and the first blank thus positioned is attracted by the first magnet clamp. Subsequently, the positioning stopper is retracted to the rest position, then the second blank is pushed by the second push member so that the abutting surface of the second blank may be butted against the first blank, and the second blank thus positioned is attracted by the second magnet clamp. In this manner, the first and second blanks are positioned and fixed on the table.

Thus, since the first and second blanks are positioned and fixed on the table by using the abutting surface of the first blank as a reference position, the abutting surfaces of the two blanks to be welded can be accurately positioned relative to the table. Also, when the table is moved to the processing station thereafter, the positioning stopper is already moved to the rest position and does not project above the table. Further, since the two blanks are fixed on the table by the first and second magnet clamps, respectively, neither the positioning stopper nor the magnet clamps interfere with the welding process.

In the welding apparatus according to claim 14, butt welding is performed on the two blanks by using the laser beam emitted from the laser head. Laser beam welding requires that the blanks should be butted against each other with very high accuracy, but since the two blanks can be positioned with high accuracy by using the abutting surface as the reference position, as stated above, it is possible to significantly improve the quality of laser welding.

In the welding apparatus according to claim 15, at least one of the first and second blanks is fixed on the table by at least one of the first and second magnet clamps. Thus, even in cases where at least one of the first and second blanks is large in size, the blanks can be efficiently fixed on the table by the magnet clamps.

In the welding apparatus according to claim 16, the table can be used also for butting the third and fourth blanks against each other, in place of the first and second blanks, and welding the third and fourth blanks together along their abutting surfaces, wherein the third blank has a basic shape corresponding to a mirror-image form of the first blank and the fourth blank has a basic shape corresponding to a mirror-image form of the second blank. Specifically, by providing the table with an additional positioning stopper, an additional push member and an additional magnet clamp for positioning and fixing the third and fourth blanks, the third and fourth blanks can be positioned and fixed on the table without the need to prepare a separate table exclusively for the third and fourth blanks.

In the welding apparatus according to claim 17, at least part of the third and fourth blanks is attracted by at least one of the first and second magnet clamps provided on the table, and in addition, the table is provided with a magnet clamp capable of attracting at least one of the third and fourth blanks. It is therefore possible to minimize the number of magnet clamps that need to be additionally provided to fix the third and fourth blanks on the table.

In the welding apparatus according to claim 18, the abutting surface of the third blank is butted against at least one of the positioning stopper and an additional positioning stopper provided on the table. That is, the abutting surface of the third blank may be butted against the positioning stopper which is used also by the first blank, or against both the positioning stopper and the additional positioning stopper, or against the additional positioning stopper alone, depending on the shapes of the first and second blanks, the shapes of the third and fourth blanks, and the size of the table. Thus, it is possible to minimize the number of positioning stoppers that are needed to position the third blank.

In the welding apparatus according to claim 19, the third blank is pushed by at least one of the first push member and an additional push member provided on the table so that the abutting surface of the third blank may be butted against at least one of the positioning stopper and the additional positioning stopper. That is, the third blank may be pushed by the push member which is used also by the first blank, or by both the push member and the additional push member, or solely by the additional push member, depending on the shapes of the first and second blanks, the shapes of the third and fourth blanks, and the size of the table. It is therefore possible to minimize the number of push members that are needed to push the first and third blanks.

In the welding apparatus according to claim 20, the fourth blank is pushed by at least one of the second push member and an additional push member provided on the table so that the abutting surface of the fourth blank may be butted against the abutting surface of the third blank. That is to say, the fourth blank may be pushed by the push member which is used also by the second blank, or by both the push member and the additional push member, or solely by the additional push member, depending on the shapes of the first and second blanks, the shapes of the third and fourth blanks, and the size of the table. Thus, it is possible to minimize the number of push members that are needed to push the second and fourth blanks.

### Brief Description of the Drawings

FIG. 1 is a plan view of an entire welding apparatus according to one embodiment of the present invention.
FIG. 2 is a sectional view of the welding apparatus, taken along line II-II in FIG. 1.
FIG. 3 is a plan view of a table appearing in FIG. 1.
FIG. 4 is a sectional view of a first positioning station, taken along line IV-IV in FIG. 1.
FIG. 5 is a sectional view illustrating operation of the first positioning station.
FIG. 6 is a sectional view of a first welding station, taken along line VI-VI in FIG. 1.
FIG. 7 is a sectional view of a cutting station, taken along line VII-VII in FIG. 1.
FIG. 8 is a sectional view of a second positioning station, taken along line VIII-VIII in FIG. 1.
FIG. 9 is a sectional view of a second welding station, taken along line IX-IX in FIG. 1.
FIG. 10 is a plan view of a table according to another embodiment of the present invention.
FIG. 11 is a plan view of an entire welding apparatus according to still another embodiment of the present invention.
FIG. 12 is a plan view of an entire welding apparatus according to yet another embodiment of the present invention.
FIG. 13 illustrates a positioning station as viewed in a direction indicated by an arrow X in FIG. 12.
FIG. 14 is an enlarged view of a positioning stopper appearing in FIG. 13.
FIG. 15 is a front view illustrating operation of the positioning station.
FIG. 16 is a front view illustrating next operation of the positioning station.
FIG. 17 is a front view illustrating subsequent operation of the positioning station.
FIG. 18 illustrates a welding station as viewed in a direction indicated by an arrow XI in FIG. 12.
FIG. 19 is a vertical sectional view of a table of a welding apparatus according to another embodiment of the present invention.
FIG. 20 is a plan view of a table of a welding apparatus according to still another embodiment of the present invention.
FIG. 21 is a plan view illustrating a modification of the table shown in FIG. 20.

### Mode of Carrying out the Invention

The best mode of carrying out the present invention will be hereinafter described with reference to the accompanying drawings.

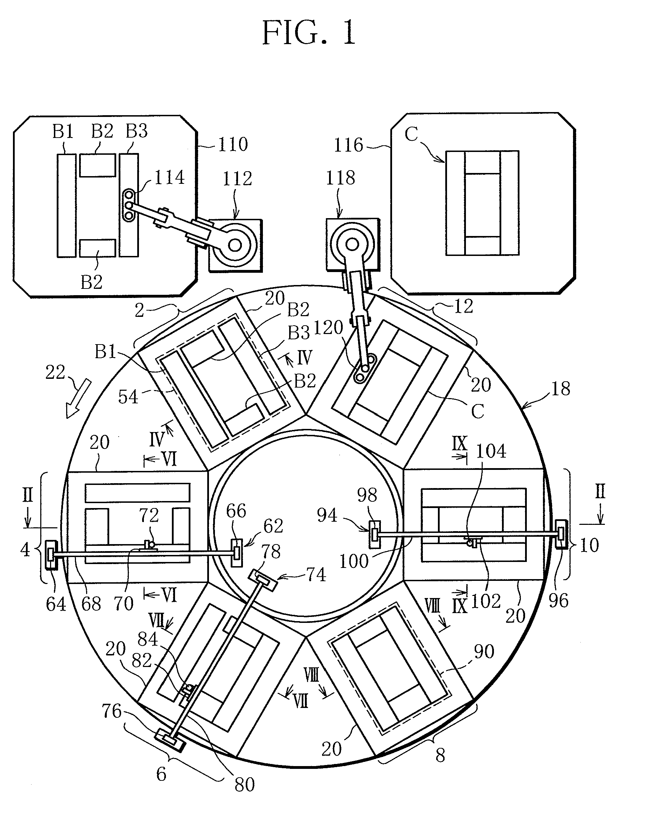

As illustrated in FIG. 1, a welding apparatus comprises a first positioning station 2, a first welding station 4, a cutting station 6, a second positioning station 8, a second welding station 10, and an unloading station 12. These six stations 2, 4, 6, 8, 10 and 12 are arranged in a circle at an equal pitch. A rotary platform 18 is arranged above the stations and is rotatably supported on a base 14 with bearings 16 interposed therebetween.

Six tables 20 equal in number to the stations are arranged on the rotary platform 18 at a pitch equal to that at which the stations are arranged. The rotary platform 18 can be rotated by a drive unit, not shown, in a direction indicated by an arrow 22. Specifically, the rotary platform 18 is rotated by an angle equal to the above pitch at a time so that the tables 20 can be successively stopped at the respective stations. The rotary platform 18 is in the form of a doughnut with a hole in its center.

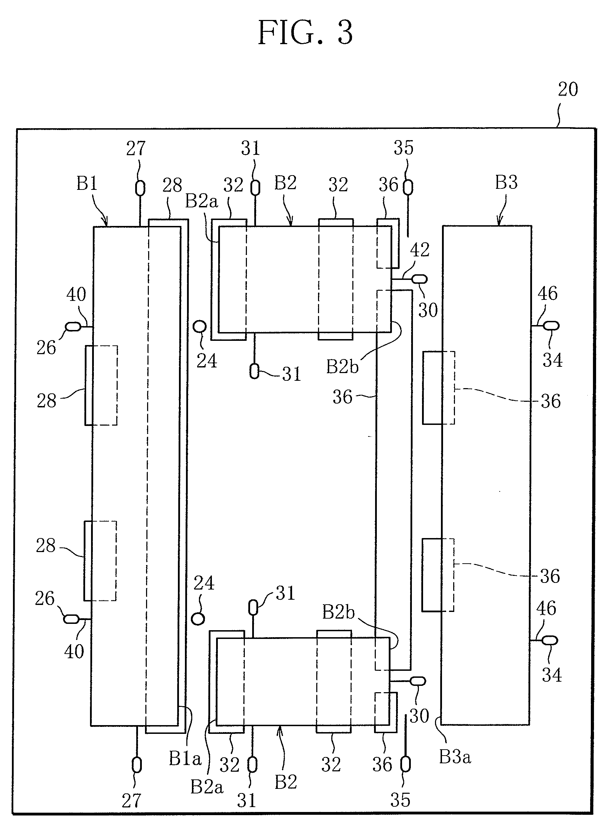

Each table 20 is configured so as to be suited for butt welding performed on a first blank B1 and two second blanks B2, which are each a plate-like metal panel as a workpiece, as well as for butt welding performed on the second blanks B2 and a third blank B3. More specifically, as illustrated in FIG. 3, the table 20 has positioning stoppers 24 against which an abutting surface B1a of the first blank B1 is to be butted, first push members 26 for pushing the first blank B1 to cause the abutting surface B1a of the first blank B1 to abut against the positioning stoppers 24, first guide members 27 for positioning the first blank B1 in a width direction thereof, that is, in a direction perpendicular to the direction in which the first blank B1 is pushed by the first push members 26, and magnet clamps 28 as a first fixing device for fixing the first blank B1 on the table 20.

Also, the table 20 has second push members 30 for pushing the respective second blanks B2 to cause abutting surfaces B2a of the second blanks B2 to abut against the abutting surface B1a of the first blank B1 fixed on the table 20, second guide members 31 for positioning the second blanks B2 in their width direction, that is, in a direction perpendicular to the direction in which the second blanks B2 are pushed by the second push members 30, and magnet clamps 32 as a second fixing device for fixing the second blanks B2 on the table 20.

Further, the table 20 has third push members 34 for pushing the third blank B3 to cause an abutting surface B3a of the third blank B3 to abut against abutting surfaces B2b of the respective second blanks B2 fixed on the table 20, third guide members 35 for positioning the third blank B3 in a width direction thereof, that is, in a direction perpendicular to the direction in which the third blank B3 is pushed by the third push members 34, and magnet clamps 36 as a third fixing device for fixing the third blank B3 on the table 20.

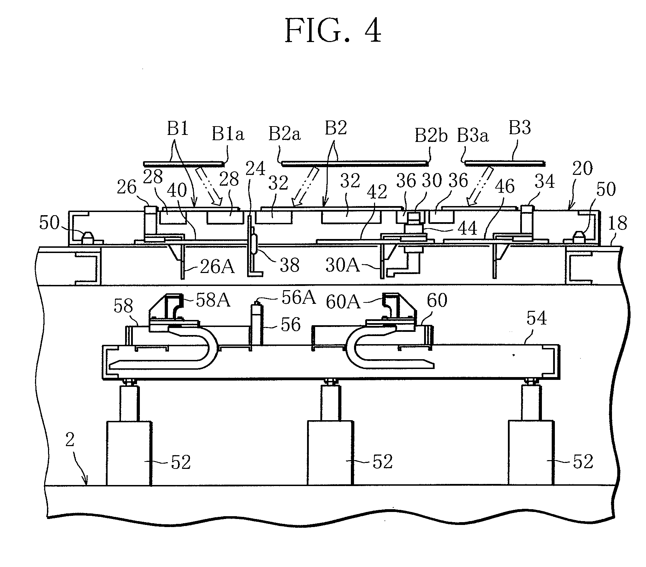

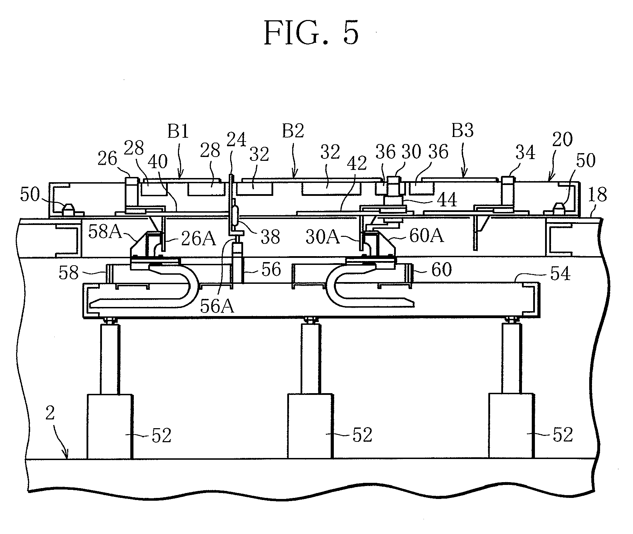

Each positioning stopper 24 is supported by a guide 38 of the table 20 such that the positioning stopper 24 is movable between an active position illustrated in FIG. 5, in which the positioning stopper 24 projects from the upper surface of the table 20 to allow the first blank B1 to abut thereagainst, and a rest position illustrated in FIGS. 4 and 6 to 9, in which the positioning stopper 24 is lowered beneath the upper surface of the table 20. Normally, the positioning stopper 24 is located at the rest position, illustrated in FIG. 4, due to its own weight or by the force of a spring, not shown.

The first push members 26 are each supported on a guide 40 of the table 20 so as to be able to push the first blank B1 on the table 20, and have an engaging portion 26A projecting downward from the table 20.

Each of the second push members 30 is supported on a guide 42 so as to be able to push the corresponding second blank B2 on the table 20 and has an engaging portion 30A projecting downward from the table 20. Further, each second push member 30 is supported by a vertical guide 44 which in turn is supported on the guide 42, such that the second push member 30 is movable between an active position in which the second push member 30 projects above the table 20, as illustrated in FIG. 5, and a rest position in which the second push member 30 is lowered beneath the upper surface of the table 20, as illustrated in FIG. 4. Normally, the second push member 30 is located at the rest position due to its own weight or by the force of a spring, not shown.

The third push members 34 are each supported on a guide 46 so as to be able to push the third blank B3 on the table 20 and have an engaging portion 30A projecting downward from the table 20. The first push members 26, the second push members 30 and the third push members 34 are urged by springs, not shown, disposed between the table 20 and the respective push members 26, 30 and 34 so as to return to respective predetermined positions relative to the guides 40, 42 and 46.

The first, second and third guide members 27, 31 and 35 are each movable between an active position in which the guide members 27, 31 and 35 are in contact with the first, second and third blanks B1, B2 and B3, respectively, and an inactive position in which the guide members 27, 31 and 35 are moved back away from the active position. The guide members 27, 31 and 35 as well as the push members 26, 30, and 34 are moved by respective actuators, not shown, which are provided at the first and second positioning stations 2 and 8.

The magnet clamps 28, 32 and 36 are arranged substantially in flush with the upper surface of the table 20 and exert magnetic force to attract the lower surfaces of the first, second and third blanks B1, B2 and B3, respectively, thereby fixing the blanks B1, B2 and B3 on the table 20. Each of the magnet clamps 28, 32 and 36 is provided with an ordinary permanent magnet, a magnet whose polarities are reversible, and a coil for reversing the polarities of the magnet. By energizing the coil, it is possible to switch the mode of the magnet between a mode in which magnetic force is produced on the surface of the magnet clamp and a mode in which the magnetic force is lost on the surface of the magnet clamp. To permit the mode of the magnet clamps 28, 32 and 36 to be switched at the first and second positioning stations 2 and 8 and the unloading station 12, it is necessary that electric current should be supplied to the coils associated with the respective magnet clamps. To this end, the stations 2, 8 and 12 are equipped with noncontact-type power supply units, not shown, for supplying control currents to the magnet clamps 28, 32 and 36 on the table 20.

Each table 20 is accurately fixed in position on the rotary platform 18 by positioning pins 50 protruding from the rotary platform 18.

As illustrated in FIGS. 4 and 5, the first positioning station 2 is provided with a positioning station base 54 which can be moved up and down by lifting actuators 52. The positioning station base 54 is equipped with a stopper actuator 56 for pushing the positioning stoppers 24 upward to their active position, a first push actuator 58 for driving the first push members 26, and a second push actuator 60 for driving the second push members 30.

When the base 54 of the first positioning station 2 is lowered as illustrated in FIG. 4, the stopper actuator 56 and the first and second push actuators 58 and 60 also descend and do not interfere with any surrounding parts even if the table 20 is moved together with the rotary platform 18. On the other hand, when the base 54 of the first positioning station 2 is elevated as shown in FIG. 5, the positioning stoppers 24 can be moved to their active position by a driving part 56A of the stopper actuator 56. Also, driving parts 58A and 60A of the actuators 58 and 60 become engaged with the respective engaging portions 26A and 30A of the push members 26 and 30, so that the actuators 58 and 60 are ready to push the push members 26 and 30, respectively. As the base 54 ascends, the driving part 60A of the actuator 60 pushes, with its upper surface, the second push members 30 upward so as to project from the table 20 as illustrated.

The first welding station 4 is equipped with a laser welding device 62. The laser welding device 62 includes an outer post 64 set up at the welding station 4 and located radially outward of the rotary platform 18, an inner post 66 set up in a central space radially inward of the rotary platform 18, a guide member 68, or a rail, extending between the outer and inner posts 64 and 66, a slider 70 movable along the guide member 68, and a laser head 72 supported on the slider 70 and capable of emitting a laser beam. The laser head 72 is supported by the slider 70 in such a manner that the laser head 72 is vertically movable and is also movable in directions perpendicular to the moving direction of the slider 70. The positioning of the slider 70 relative to the guide member 68 and the positioning of the laser head 72 relative to the slider 70 are controlled by a controller, not shown, in accordance with the blank welding position.

The cutting station 6 is equipped with a laser cutting device 74. The laser cutting device 74, which is similar to the laser welding device 62 described above, includes an outer post 76 set up at the cutting station 6 and located radially outward of the rotary platform 18, an inner post 78 set up in the central space radially inward of the rotary platform 18, a guide member 80, or a rail, extending between the outer and inner posts 76 and 78, a slider 82 movable along the guide member 80, and a laser head 84 supported on the slider 82 and capable of emitting a laser beam. The laser head 84 is supported by the slider 82 in such a manner that the laser head 84 is vertically movable and is also movable in directions perpendicular to the moving direction of the slider 82. The positioning of the slider 82 relative to the guide member 80 and the positioning of the laser head 84 relative to the slider 82 are controlled by a controller, not shown, in accordance with the blank cutting position.

The objective of cutting at the cutting station 6 is to rectify the abutting surfaces B2b of the second blanks B2 which have been welded to the first blank B1 at the first welding station 4. There is a possibility that error is caused between the abutting surfaces B2b of the second blanks B2 welded to the first blank B1 and intended design dimensions due to manufacturing errors of the first and second blanks B1 and B2 or error caused at the time of welding the blanks B1 and B2 together. Thus, the cutting is effected in order to improve butting accuracy between the second and third blanks B2 and B3. If the abutting surfaces B2b of the second blanks B2 welded to the first blank B1 have no errors, no substantial cutting is executed at the cutting station 6, though a laser beam is emitted from the laser head 84. That is to say, the cutting may be omitted as the case may be.

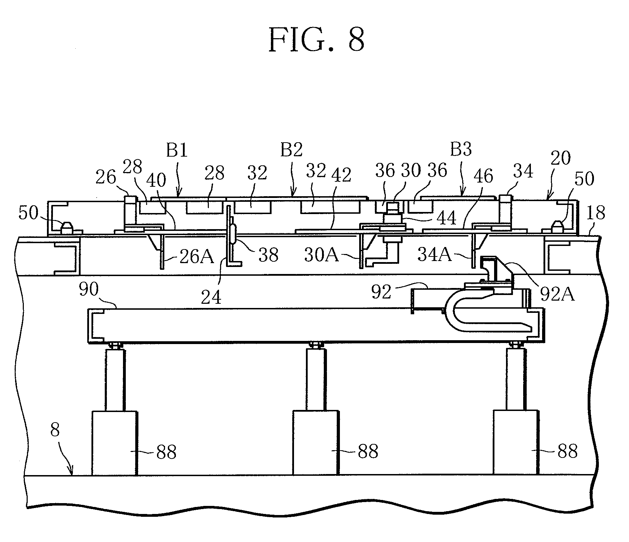

As illustrated in FIG. 8, the second positioning station 8 is provided with a positioning station base 90 which can be moved up and down by lifting actuators 88. The positioning station base 90 is equipped with a third push actuator 92 for driving the third push members 34.

When the base 90 of the second positioning station 8 is lowered, the third push actuator 92 also descends and does not interfere with any surrounding parts even if the table 20 is moved together with the rotary platform 18, as seen from FIG. 8. On the other hand, when the base 90 of the second positioning station 8 is elevated, a driving part 92A of the actuator 92 becomes engaged with the engaging portion 34A of the push members 34, so that the actuator 92 is ready to push the push members 34.

The second welding station 10 is equipped with a laser welding device 94. The laser welding device 94, which is substantially identical in construction with the aforementioned laser welding device 62, includes an outer post 96 set up at the welding station 10 and located radially outward of the rotary platform 18, an inner post 98 set up in the central space radially inward of the rotary platform 18, a guide member 100, or a rail, extending between the outer and inner posts 96 and 98, a slider 102 movable along the guide member 100, and a laser head 104 supported on the slider 102 and capable of emitting a laser beam. The laser head 104 is supported by the slider 102 in such a manner that the laser head 104 is vertically movable and is also movable in directions perpendicular to the moving direction of the slider 102. The positioning of the slider 102 relative to the guide member 100 and the positioning of the laser head 104 relative to the slider 102 are controlled by a controller, not shown, in accordance with the blank welding position.

If, in this embodiment, the base 14 has no central hole cut therein, the inner post 66 of the welding device 62, the inner post 78 of the cutting device 74 and the inner post 98 of the welding device 94 may be set up on the base 14.

A stockyard 110, where the blanks B1, B2 and B3 not welded yet are stocked, and a loading robot 112 are arranged in the vicinity of the first positioning station 2. The robot 112 has an attraction unit 114 attached to the distal end of an arm thereof and is capable of attracting a desired one of the blanks B1, B2 and B3 in the stockyard 110 and transferring the attracted blank to a predetermined position on the table 20 then located at the positioning station 2. The welding apparatus is also provided with a stockyard 116 where finished articles C, each obtained by welding the blanks B1, B2 and B3 together, are stocked, and an unloading robot 118. The robot 118 has an attraction unit 120 attached to the distal end of an arm thereof and is capable of attracting the finished article C on the table 20 then located at the unloading station 12 and transferring the attracted finished article C to a predetermined position of the stockyard 116.

Operation of the welding apparatus will be now described. First, as illustrated in FIG. 1, the loading robot 112 successively attracts the blanks B1, B2 and B3 stocked in the stockyard 110 and transfers the blanks to respective predetermined loading positions on the table 20 then located at the first positioning station 2. The loading positions need not be highly accurate but should guarantee that when the blanks B1, B2 and B3 are to positioned, the positioning stoppers 24, the push members 26, 30 and 40, or the guide members 27, 31 and 35 are able to come into contact with the corresponding blanks B1, B2 and B3.

At the first positioning station 2, the base 54 is elevated by the lifting actuators 52 as shown in FIG. 5, and then the positioning stoppers 24 are moved by the stopper actuator 46 to their active position where the positioning stoppers 24 project from the table 20. After the positioning stoppers 24 are moved to their active position with the base 54 raised, the blanks B1, B2 and B3 may be loaded onto the table 20. Subsequently, the first blank B1 is pushed by the first push members 26 driven by the first push actuator 58 so that the abutting surface B1a of the first blank B1 may abut against the positioning stoppers 24. Simultaneously, the first blank B1 is positioned widthwise by the first guide members 27 driven by actuators, not shown, whereupon the positioning of the first blank B1 is completed. The first blank B1 is then fixed on the table 20 by the magnet clamps 28.

Then, the positioning stoppers 24 are lowered by the actuator 56 from the position illustrated in FIG. 5, so as to be located beneath the upper surface of the table 20. Subsequently, the second blanks B2 are pushed by the second push members 30 driven by the second push actuator 60 so that the abutting surfaces B2a of the second blanks B2 may abut against the abutting surface B1a of the first blank B1, and also the second blanks B2 are positioned widthwise by the second guide members 31 driven by actuators, not shown, whereupon the positioning of the second blanks B2 is completed. The second blanks B2 are then fixed on the table 20 by the magnet clamps 32.

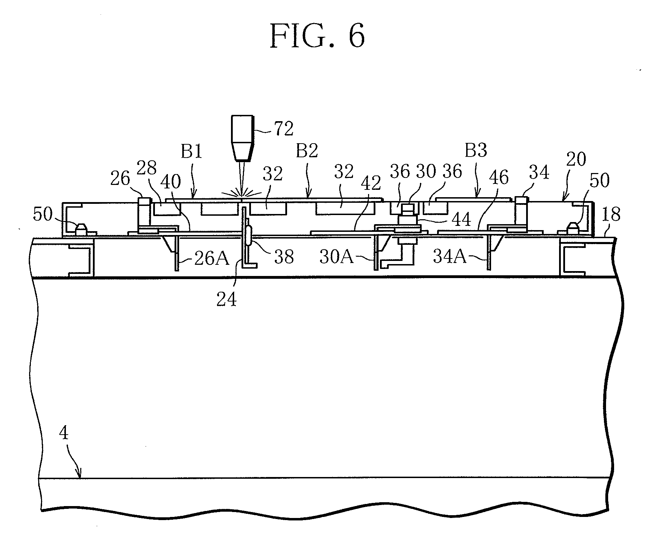

When the above process of the first positioning station 2 is completed, the rotary platform 18 is rotated by an angle corresponding to the aforementioned pitch and a welding process is executed at the first welding station 4. At the first welding station 4, a laser beam is emitted from the laser head 72 onto the butted junction of the first and second blanks B1 and B2 fixed on the table 20, as illustrated in FIG. 6, to weld the blanks B1 and B2 to each other. The first and second blanks B1 and B2 thus welded together are referred to herein as a blank assembly.

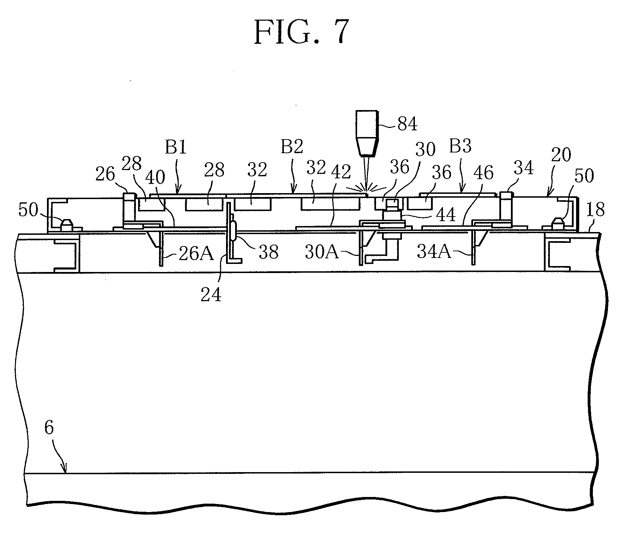

On completion of the process at the first welding station 4, the rotary platform 18 is rotated by an angle corresponding to the aforementioned pitch and a cutting process is carried out at the cutting station 6. At the cutting station 6, a laser beam is emitted from the laser head 84, as illustrated in FIG. 7, and moved along the abutting surfaces B2b of the second blanks B2 welded to the first blank B1, to rectify the abutting surfaces B2b so as to have a predetermined shape.

When the cutting process of the cutting station 6 is completed, the rotary platform 18 is rotated by an angle corresponding to the aforementioned pitch and a positioning process is executed at the second positioning station 8. At the second positioning station 8, the base 90 is elevated by the lifting actuators 88 as shown in FIG. 8, and then the third blank B3 is pushed by the third push members 34 driven by the third push actuator 92 so that the abutting surface B3a of the third blank B3 may abut against the abutting surfaces B2b of the second blanks B2. Simultaneously, the third blank B3 is positioned widthwise by the third guide members 35 driven by actuators, not shown, whereupon the positioning of the third blank B3 is completed. The third blank B3 is then fixed on the table 20 by the magnet clamps 36. The blank assembly and the third blank B3 thus positioned relative to the blank assembly form a blank aggregate.

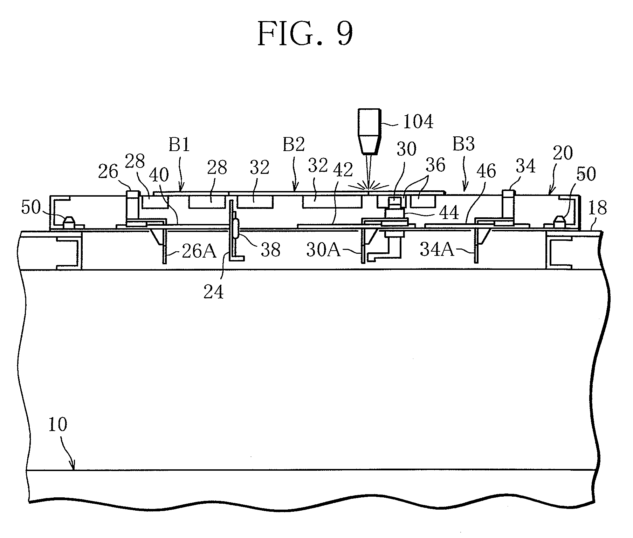

After the positioning process of the second positioning station 8 is completed, the rotary platform 18 is rotated by an angle corresponding to the aforementioned pitch and a welding process is performed at the second welding station 10. At the second welding station 10, a laser beam is emitted from the laser head 104 onto the butted junctions between the second blanks B2 and the third blank B3, as illustrated in FIG. 9, to weld the blanks B2 and B3 together. This completes the butt welding of the blanks B1, B2 and B3.

When the welding process of the second welding station 10 is completed, the rotary platform 18 is rotated by an angle corresponding to the aforementioned pitch and an unloading process is executed at the unloading station 12. At the unloading station 12, the blanks B1, B2 and B3 are released from the fixing force exerted by the magnet clamps 28, 32 and 36. Then, as shown in FIG. 1, the unloading robot 118 attracts the finished article C on which the butt welding has been performed, and transfers the article C to the finished article stockyard 116.

As described above, the welding apparatus of this embodiment is equipped with six tables 20 equal in number to the stations. The loading station 2 is successively loaded with new blanks B1, B2 and B3, and the finished article C is unloaded one after another from the unloading station 12. Thus, the welding apparatus is configured such that the stations 2, 4, 6, 8, 10 and 12 execute the respective processes at the same timing.

Advantageous effects of the welding apparatus will be described. As explained above, at the first positioning station 2 of the welding apparatus, the first and second blanks B1 and B2 are fixed in position on the table 20, then at the first welding station 4, the first and second blanks B1 and B2 are welded to each other, and at the cutting station 6, the abutting surfaces B2b of the second blanks B2, against which the third blank B is to be abutted, are cut into the predetermined shape. Accordingly, at the second positioning station 8, the second and third blanks B2 and B3 can be butted against each other with high precision, despite dimensional errors of the first and second blanks B1 and B2 or errors caused by the butt welding of the first and second blanks B1 and B2. At the subsequent second welding station 10, therefore, satisfactory butt welding can be performed on the second and third blanks B2 and B3, so that the weld quality improves.

The stations 2, 4, 6, 8, 10 and 12 are arranged in order and all stations are provided with the respective tables 20. Also, a plurality of processes are executed in parallel at the respective stations, and when the processes of the respective stations are completed, all tables 20 are moved to their respective succeeding stations. This makes it possible to shorten the cycle time for processing the workpieces, namely, the blanks. Further, the table 20 from which the finished article has been unloaded at the unloading station 12 is returned again to the first positioning station 2. Thus, the individual tables 20 are circulated among the stations, whereby the number of required tables can be minimized.

Further, the welding apparatus is configured such that the six stations 2, 4, 6, 8, 10 and 12 execute the respective processes at the same timing, whereby the processing cycle can be shortened. In addition, since the stations are arranged in a circle, it is unnecessary to provide a long return line for returning the table 20 from the last station 12 to the first station 2. The tables 20 are arranged on the rotary platform 18 at the same pitch as that of the stations, and when the processes of the respective stations are completed, the rotary platform 18 is rotated by an angle corresponding to the pitch, with the result that the tables 20 move to their respective succeeding stations. The transfer device for moving the individual tables 20 as well as the control for such movement can therefore be greatly simplified.

Also, the rotary platform 18 is shaped like a doughnut, and the guide members 68, 80 and 104 supporting the laser heads 72, 84 and 104 are supported at both ends by the outer posts 64, 76 and 96 and the inner posts 66, 78 and 98, respectively, to allow the laser heads 72, 84 and 104 to move across the table 20 for welding or cutting the blanks. Since the guide members 68, 80 and 104 can each be securely supported at both ends, the laser heads 72, 84 and 104 movably supported by these guide members can accurately follow their predetermined path without deviating unstably. Although the three stations 4, 6 and 10 are equipped with the welding device 62, the cutting device 74 and the welding device 94, respectively, the guide members 68, 80 and 104 do not interfere with each other, thus greatly improving flexibility of the arrangement of the welding devices and the cutting device. In connection with the flexibility of arrangement, where the rotary platform 18 is not shaped like a doughnut and has a circular shape with no central hole therein, sufficient mechanical strength can be ensured if the guide members of the welding and cutting devices are configured to extend across the entire rotary platform 18. In this case, however, a problem arises in that the guide members interfere with each other.

The welding apparatus of this embodiment requires six tables 20, but each table 20 has to be provided only with the positioning stoppers 24, the push members 26, 30 and 34, and the guide members 27, 31 and 35 for positioning the blanks B1, B2 and B3. The actuators 56, 58, 60 and 92 for driving these members are arranged on the bases 54 and 90 of the first and second positioning stations 2 and 8. Since the actuators need not be provided on each table 20, it is possible to prevent the tables 20 from being increased in size and also to minimize the number of the actuators, whereby overall cost can be reduced.

At the first positioning station 2, as the base 54 rises, the driving part 56A of the stopper actuator 56 engages with and raises the positioning stoppers 24. Also, the driving part 58A of the push actuator 58 engages with the engaging portion 26A of the first push members 26 and becomes ready to push the push members 26, and the driving part 60A of the push actuator 60 causes the second push members 30 to project above the table 20 and engages with the engaging portion 30a so as to be ready to push the push members 30. When the positioning process of the first positioning station 2 is completed, on the other hand, the engagement of the stopper actuator 56 with the positioning stoppers 24 and the engagement of the push actuators 58 and 60 with the respective push members 26 and 30 are automatically released as soon as the base 54 is lowered. Thus, the individual actuators can easily engage with and disengage from the respective members.

Similarly, at the second positioning station 8, as the base 90 is elevated, the driving part 92A of the push actuator 92 engages with the engaging portion 34A of the third push members 34 and becomes ready to push the push members 34. This engagement of the push actuator 92 with the push members 34 is automatically released as the base 90 lowers. Also, in this case, the actuator can easily engage with and disengage from the corresponding members.

The blanks B1, B2 and B3 are fixed on the table 20 with the lower surfaces thereof attracted to the magnet clamps 28, 32 and 36. The fixing devices do not have portions that protrude above the table 20 while the blanks B1, B2 and B3 are fixed. It is therefore possible to avoid a situation where such protruding portions interfere with the welding process or the movement of the table 20.

The first and second blanks B1 and B2 are positioned in the following manner: First, the abutting surface B1a of the first blank B1 is butted against the positioning stoppers 24 in the active position, to position the first block B1, and after the first blank B1 is fixed, the positioning stoppers 24 are moved to the rest position. Subsequently, the abutting surfaces B2a of the second blanks B2 are butted against the abutting surface B1a of the first blank B1, to position the second blanks B2. Accordingly, the abutting surfaces B1a and B2a of the blanks B1 and B2 to be welded together can be accurately positioned relative to the table 20, and it is also possible to prevent the positioning stoppers 24 from interfering with the welding process when the blanks B1 and B2 are welded together at their abutting surfaces.

Further, the abutting surfaces of the second blanks B2 which have been welded to the first blank B1 at the first welding station 4 are cut for rectification at the succeeding cutting station 6. The butting accuracy between the second and third blanks B2 and B3 can therefore be enhanced, making it possible to improve the weld quality.

While the embodiment of the present invention has been described above, any suitable modification may be made thereto. For example, the welding apparatus may be configured to include a total of five stations with the first positioning station 2 and the unloading station 12 combined into one. In this case, the single station is used in such a manner that after the finished article C is unloaded from the table 20, the blanks B1, B2 and B3 are loaded onto the table 20.

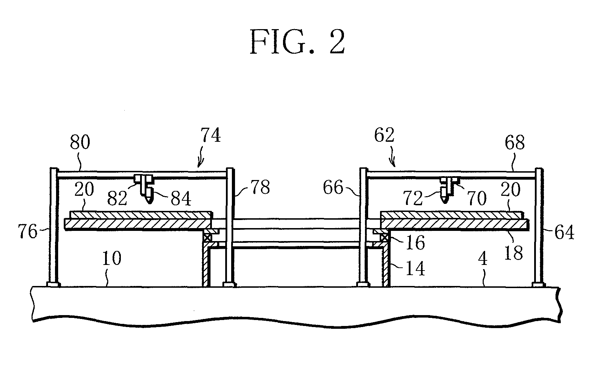

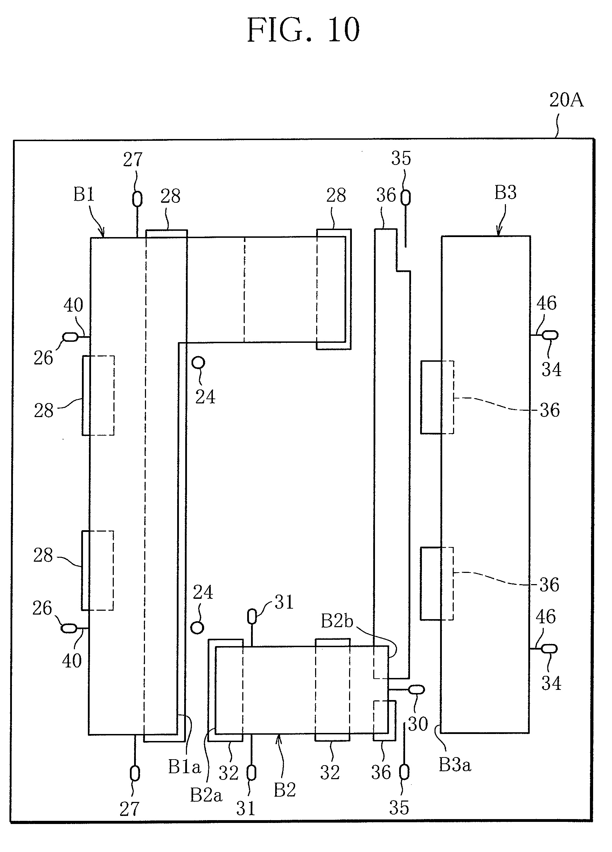

Referring now to FIG. 10, another embodiment of the present invention will be described. In FIG. 10, like reference signs are used to denote elements substantially identical with those of the embodiment illustrated in FIGS. 1 to 9, and detailed description of such elements is omitted. In this embodiment, a table 20A is employed in place of the table 20. The table 20A is adapted for a welding process wherein the first blank B1 having an inverted L shape and the second blank B2 are welded to each other and then the third blank B3 is welded to the first and second blanks B1 and B2. More specifically, the inverted L-shaped first blank B1 is positioned on the table 20A of FIG. 10 by means of the positioning stoppers 24, the first push members 26 and the guide members 27, and then fixed by the first magnet clamps 28. The second blank B2 is positioned relative to the first blank B1 by means of the second push member 30 and the guide members 31, and then fixed by the second magnet clamps 32. The third blank B3 is positioned by the third push members 34 and the guide members 35 relative to the first and second blanks B1 and B2 welded to each other, and then is fixed by the third magnet clamps 36.

Thus, the embodiment illustrated in FIG. 10 differs from the embodiment illustrated in FIGS. 1 through 9 in that the third blank B3 is welded to the first blank B1 as well. From the standpoint that the aforementioned blank assembly and the third blank B3 are welded to each other, however, the embodiment illustrated in FIG. 10 is substantially identical with that illustrated in FIGS. 1 to 9, because the blank assembly is made up of the first and second blanks B1 and B2 and welding the third blank B3 to the blank assembly means welding the third blank B3 to the first blank B1 or the second blank B2 or both.

In this embodiment, the second blank B2 is welded to the first blank B1 at the first welding station 4. At the cutting station 6, not only the abutting surface B2b of the second blank B2 but an abutting surface B1b of the first blank B1, against which the abutting surface B3a of the third blank B3 is to be butted, are cut into the predetermined shape by the cutting device 74. Then, at the second positioning station 8, the third blank B3 is positioned relative to the first and second blanks B1 and B2. At the second welding station 10, the third blank B3 is welded to the first and second blanks B1 and B2.

This embodiment can therefore provide advantageous effects substantially identical with those achieved by the embodiment illustrated in FIGS. 1 to 9.

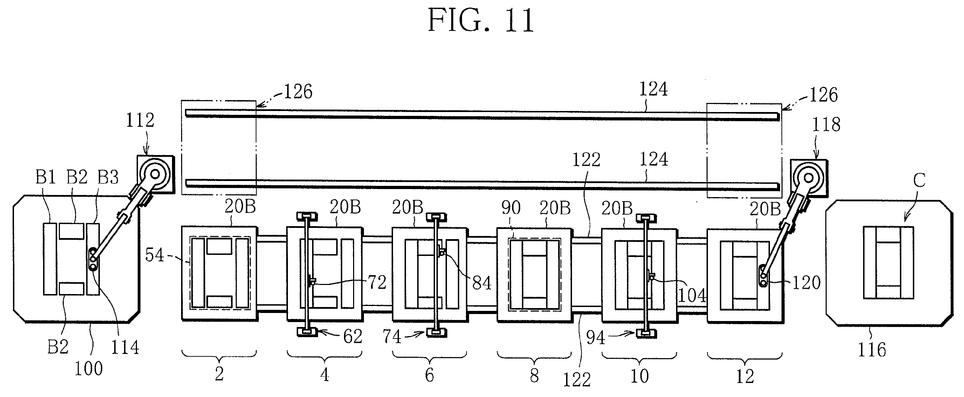

FIG. 11 illustrates still another embodiment of the present invention. In FIG. 11, like reference signs are used to denote elements substantially identical with those of the embodiments illustrated in FIGS. 1 to 10, and detailed description of such elements is omitted. This embodiment differs from the embodiments illustrated in FIGS. 1 to 10 in that the stations 2, 4, 6, 8, 10 and 12 are arranged in a straight line. Specifically, as illustrated in FIG. 11, rails 122 are laid to extend through the stations 2, 4, 6, 8, 10 and 12 so that each table 20B can successively move from one station to the other. The table 20B, which is basically identical in construction with the table 20, has wheels, not shown, to allow the table 20B to move along the rails 122.

The stockyard 100 and the loading robot 112 are arranged in the vicinity of the first positioning station 2, and the finished article stockyard 116 and the robot 118 are arranged in the vicinity of the unloading station 12. In addition, rails 124 are arranged so as to extend from a location on one side of the unloading station 12 to a location on the same side of the first positioning station 2. The table 20B from which the finished article has been unloaded at the unloading station 12 is transferred onto the rails 124 on the side of the unloading station 12 by a conveyor or the like, not shown, and then moved along the rails 124 up to a standby position 126 on the side of the first positioning station 2. The table 20B at the standby position is again transferred to the first positioning station 2 by a conveyor or the like, not shown.

This embodiment also can provide advantageous effects substantially identical with those achieved by the embodiment illustrated in FIGS. 1 to 9. However, each of the tables 20B needs to be provided with a transfer device for moving the table 20B from one station to the next one, as well as with a control device for the transfer device. Also, long rails 124 need to be laid alongside the aligned stations to return the table 20B from the unloading station 12 to the first positioning station 2, thus requiring space for installing the rails 124.

In this embodiment, one additional table 20B may be provided so that while the processes are executed at the respective stations, one of the tables 20B may stand by at the standby position 126.

A welding apparatus according to a further embodiment will be now described.

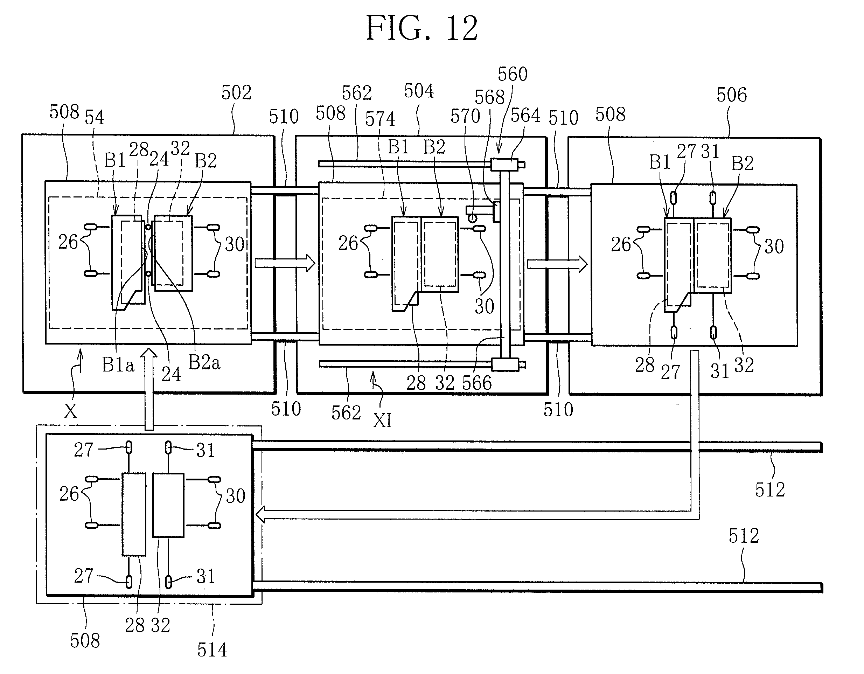

As illustrated in FIG. 12, the welding apparatus of this embodiment comprises a positioning station 502, a processing or welding station 504 and an unloading station 506 interconnected by rails 510. Each table 508 on which blanks are fixed is capable of successively moving to the stations 502, 504 and 506 in order. Rails 512 are laid so as to extend from a location on one side of the unloading station 506 to a location on the same side of the positioning station 502. The table 508 from which a finished article has been unloaded at the unloading station 506 is transferred onto the rails 512 on the side of the unloading station 506 by a conveyor or the like, not shown, and then is further moved along the rails 512 to a standby position 514 on the side of the positioning station 502. The table 508 at the standby position is again transferred to the loading station 502 by a conveyor or the like, not shown. Each table 508 is provided with wheels W for rolling on the rails 510 and 512. The welding apparatus of this embodiment is equipped with a total of four tables 508 of identical specifications.

Each table 508 has a construction nearly identical with that of the aforementioned table 20. Thus, the following description will be focused on the differences and details of certain elements, though some part of the explanation may already have been made. The table 508 is configured so as to be suited for the butt welding of first and second blanks B1 and B2. The first blank B1 has a thickness larger than that of the second blank B2.

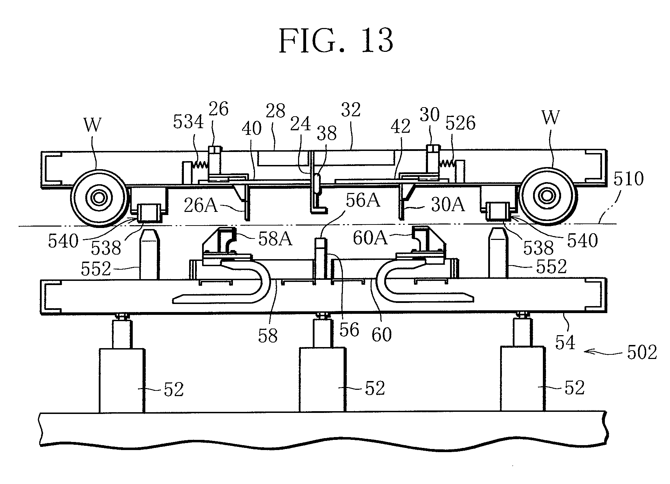

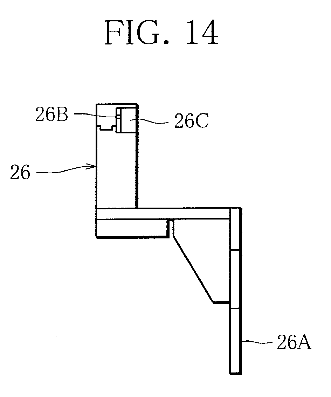

The first push members 26 which come into contact with the first blank B1 are each constructed as shown in FIG. 14 such that a contactor 26C supported by a spring 26B contacts with the blank B1. Like the first push members 26, the second push members 30 which come into contact with the second blank B2 are each constructed such that a contactor supported by a spring contacts with the blank B2. As shown in FIG. 13, the first and second push members 26 and 30 are urged by springs 534 and 536, respectively, interposed between the table 508 and the corresponding push members, so as to return to their initial position.

Each table 508 has cylindrical engaging members 540 attached to a lower surface thereof. The engaging members 540 have respective openings 538 directed downward.

The base 54, on the other hand, has engaging members 552 formed thereon. Each of the engaging members 552 has a truncated cone-shaped portion directed upward and capable of fitting into the opening 538 of the corresponding engaging portion 540 attached to the table 508.

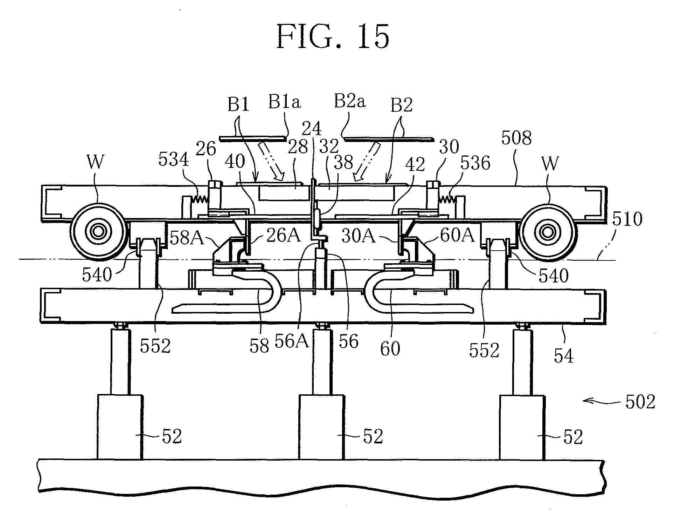

When the base 54 of the positioning station 502 is lowered as illustrated in FIG. 13, the stopper actuator 56, the first and second push actuators 58 and 60 and the engaging members 552 do not interfere with any surrounding parts even if the table 508 moves along the rails 510. On the other hand, when the base 54 of the positioning station 502 is elevated as illustrated in FIG. 15, the truncated cone-shaped portions of the engaging members 552 engage with the openings 538 of the respective engaging members 540, whereby the horizontal position of the table 508 relative to the base 54 is corrected to a normal position.

As illustrated in FIG. 12, the processing station 504 is equipped with a laser welding device 560. The laser welding device 560 includes two rails 562 extending near opposite sides of the processing station 506, respectively, in parallel with the rails 510, two posts 564 guided by the respective rails 562, a rail 566 connecting between the two posts 564 and extending perpendicularly to the rails 562, a slider 568 guided by the rail 566, and a welding head 570 supported on the slider 568 and capable of emitting a laser beam. The positioning of the posts 564 relative to the rails 562 and the positioning of the slider 568 relative to the rail 566 are controlled by a controller, not shown, in accordance with the welding position. Thus, the welding head 570 can be moved along the butted junction of the blanks B1 and B2, as described later.

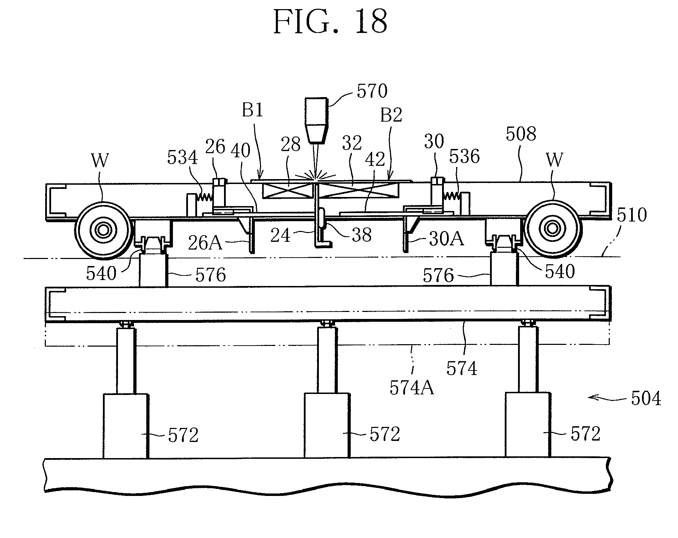

Further, as illustrated in FIG. 18, the processing station 504 is equipped with a processing station base 574 which can be moved up and down by lifting actuators 572. The base 574 has engaging members 576 protruding therefrom. Each engaging member 576 has a truncated cone-shaped portion directed upward and capable of fitting into the opening 538 of the corresponding engaging member 540 attached to the table 508, and a large-diameter portion located closer to the base than the truncated cone-shaped portion and having a larger diameter than the opening 538. When the base 574 is elevated by the lifting actuators 572 as illustrated in FIG. 18, the truncated cone-shaped portions of the engaging members 576 first engage with the openings 538 of the respective engaging members of the table 508, so that the horizontal position of the table 508 relative to the base 574 is corrected to the normal position. As the base 574 is elevated further by the lifting actuators 572, the large-diameter portions of the engaging members 576 abut upon the openings 538 of the respective engaging members 540, whereby the table 508 can be raised together with the base 574.

Operation of the welding apparatus of this embodiment will be now described. When the table 508 is moved from the standby position 514 to the positioning station 502 as illustrated in FIG. 15, first, the base 54 is elevated by the lifting actuators 52. Thus, the engaging members 552 become engaged with the respective engaging members 538 of the table 508, so that the table 508 is horizontally positioned relative to the positioning station 502. While the table 508 is in this state, the wheels W are in contact with the upper surfaces of the respective rails 510. Subsequently, the positioning stoppers 24 are moved by the stopper actuator 56 to their active position where the positioning stoppers 24 project from the table 508. Then, using a loading device such as a robot, not shown, the first blank B1 is placed on a portion of the table 508 between the stoppers 24 and the first push members 26, and the second blank B2 is placed on a portion of the table 508 between the stoppers 24 and the second push members 30. The placement of the blanks B1 and B2 on the table 508 and the movement of the positioning stoppers 24 to the active position may be executed in reverse order.

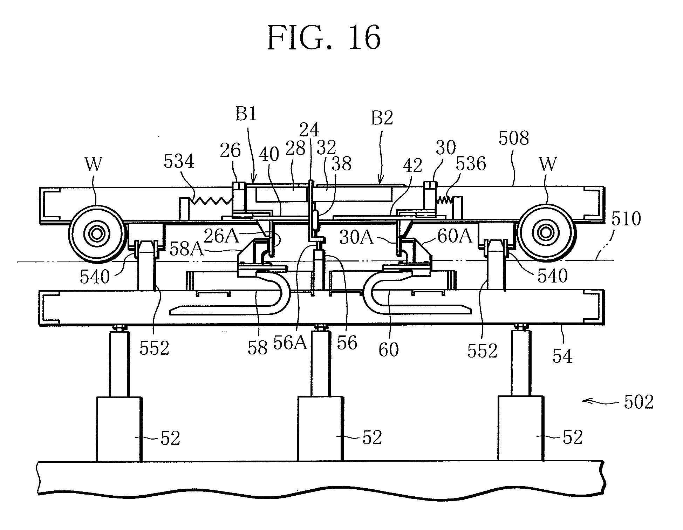

Subsequently, as illustrated in FIG. 16, the first blank B1 is pushed by the first push members 26 driven by the first push actuator 58, to cause the abutting surface B1a of the blank B1 to abut against the positioning stoppers 24, whereupon the positioning of the first blank B1 is completed. The first blank B1 is then fixed on the table 508 by the magnet clamp 28.

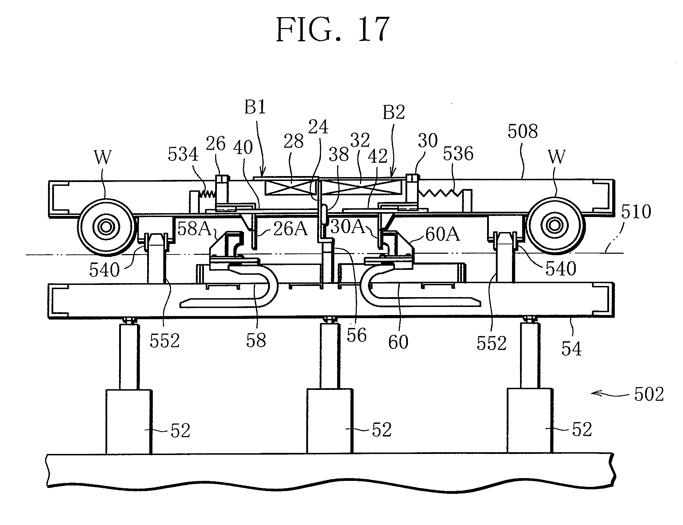

Further, as shown in FIG. 17, the positioning stoppers 24 are moved by the actuator 56 so as to be withdrawn from the upper surface of the table 508. Then, the second blank B2 is pushed by the second push members 30 driven by the second push actuator 60, to cause the abutting surface B2a of the second blank B2 to abut against the abutting surface B1a of the first blank B1, whereupon the positioning of the second blank B2 is completed. The second blank B2 is then fixed on the table 508 by the magnet clamp 32.

When the positioning process of the positioning station 502 is completed, the base 54 is lowered by the lifting actuators 52 to disengage the engaging members 552 and 540 from each other so that the table 508 can be moved from the positioning station 502.

Subsequently, the table 508 having the blanks B1 and B2 fixed on its upper surface is moved to the processing station 504 along the rails 510 by a transfer device, not shown. At the processing station 504, the base 574 is elevated by the lifting actuators 572 as illustrated in FIG. 18, to cause the engaging members 576 to engage with the respective engaging members 538 of the table 508, whereby the table 508 is positioned horizontally relative to the processing station 504. As the base 574 is further raised by the lifting actuators 572, the large-diameter portions of the engaging members 576 become butted against the edges of the openings 538 of the respective engaging members 540, and then by elevating the table 508 together with the base 574, a vertical gap between the welding head 570 of the laser welding device 560 and the blanks B1 and B2 on the table 508 is adjusted.

Then, the welding head 570 is moved such that a laser beam emitted therefrom may follow the butted junction of the blanks B1 and B2, thereby welding the butted junction. When the welding is completed, the blanks B1 and B2 are released from the attractive force exerted by the magnet clamps 28 and 32.

When the welding process of the processing station 504 is finished, the base 574 is lowered by the lifting actuators 572 as indicated by a dot-dot-dash line 574A, to disengage the engaging members 576 and 540 from each other so that the table 508 can be moved from the processing station 504.

Subsequently, the table 508, on which the blanks B1 and B2 welded together (hereinafter referred to as finished article) is placed, is moved along the rails 510 to the unloading station 506 by a transfer device, not shown. At the unloading station, the finished article is removed from the table by an unloading device such as a robot, not shown. After the finished article is unloaded, the table 508 is returned to the standby position, as stated above.

As explained above, the welding apparatus of this embodiment is equipped with four tables 508 and is configured so that the three stations 502, 504 and 506 may execute the respective processes at the same timing. That is, the welding apparatus is configured such that the loading, positioning and fixing of the blanks B1 and B2 at the positioning station 502, the welding of the blanks B1 and B2 at the processing station 504, and the unloading of the finished article at the unloading station 506 are carried out at the same time.

The welding apparatus of this embodiment has the following advantageous effects: In this embodiment, the welding apparatus is configured such that the three stations 502, 504 and 506 execute the respective processes at the same time, as stated above, and therefore, the processing cycle can be shortened. In this configuration, four tables are required, but each table 508 has only to be provided with the positioning stoppers 24 to be disposed into contact with the first blank B1, and the first and second push members 26 and 30 for pushing the first and second blanks B1 and B2, respectively. The stopper actuator 56 for driving the positioning stoppers 24 and the actuators 58 and 60 for driving the first and second push members 26 and 30 are mounted on the base 54 of the positioning station 502. Thus, since the actuators need not be mounted on each table 508, it is possible to prevent the table 508 from being increased in size and also to minimize the number of required actuators, whereby overcall cost can be reduced.

At the positioning station 504, the base 54 is elevated. This elevation of the base 54 permits the engaging members 552 provided on the base 54 to engage with the respective engaging members 540 of the table 508, thereby reliably positioning the table 508, and also permits the driving parts 58A and 60A of the push actuators 58 and 60 to become engaged with the engaging portions 26A and 30A of the respective push members 26 and 30. When the process of the positioning station 504 is completed, on the other hand, the engagement of the engaging members 552 with the respective engaging members 540 of the table 508 as well as the engagement of the push actuators with the respective push members can be released by merely lowering the base 54.

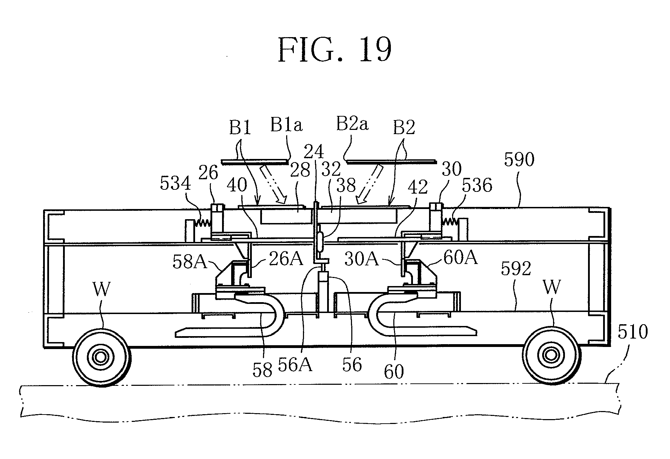

Referring now to FIG. 19, a further embodiment of the present invention will be described. In the embodiment illustrated in FIGS. 12 to 18, the stopper actuator 56 and the first and second push actuators 58 and 60 for respectively driving the positioning stoppers 24 and the first and second push members 26 and 30 provided on the table 508 are all arranged on the base 54 of the positioning station 502. The embodiment illustrated in FIG. 19, on the other hand, is configured such that the actuators 56, 58 and 60 are also provided on the table. In FIG. 19, like reference signs are used to denote elements substantially identical with those of the embodiment illustrated in FIGS. 12 to 18.

This embodiment employs a table 590, in place of the table 508 used in the above embodiment. The table 590, on which the blanks B1 and B2 are placed, has a construction basically identical with that of the table 508 of the above embodiment. Specifically, the table 590 includes the positioning stoppers 24 against which the abutting surface B1a of the first blank B1 can be butted, the first push members 26 for pushing the first blank B1 so that the abutting surface B1a of the first blank B1 may abut against the positioning stoppers 24, and the first magnet clamp 28 for fixing the first blank B1 on the table 590. Further, the table 590 includes the second push members 30 for pushing the second blank B2 so that the abutting surface B2a of the second blank B2 may abut against the abutting surface B1a of the first blank B1 fixed on the table 590, and the second magnet clamp 32 for fixing the second blank B2 on the table 590.

The table 590 is fixed on a base 592 which has wheels W so as to be movable on the rails 510. The base 592 has a construction basically identical with that of the base 54 of the above embodiment. Specifically, the base 592 is equipped with the stopper actuator 56 for pushing the positioning stoppers 24 upward to the active position, the first push actuator 58 for driving the first push members 26, and the second push actuator 60 for driving the second push members 30. The driving part 56A of the stopper actuator 56 may be joined in advance to the positioning stoppers 24. Similarly, the driving part 58A of the of the push actuator 58 may be joined in advance to the engaging portion 26A of the first push members 26, and the driving part 60A of the push actuator 60 may be joined in advance to the engaging portion 30A of the second push members 30.

Since, in this embodiment, the table 590 is provided with the actuators 56, 58 and 60, the positioning station 502 need not be equipped with the vertically movable base 54. However, since the table 590 cannot be vertically moved at the welding station 504, the welding head 570 of the welding device 560 is preferably supported so that a vertical position thereof relative to the slider 568 may be adjustable.

Also in the embodiment illustrated in FIG. 19, the positioning is carried out in the same manner as in the embodiment illustrated in FIGS. 12 to 18. Specifically, at the positioning station 502, the abutting surface B1a of the first blank B1 is caused to abut against the positioning stoppers 24 in the active position, to position the first blank B1, and after the first blank B1 is fixed, the positioning stoppers 24 are moved to the rest position. Subsequently, the abutting surface B2a of the second blank B2 is caused to abut against the abutting surface B1a of the first blank B1, to position the second blank B2. Thus, also in this embodiment, the abutting surfaces B1a and B2a of the blanks B1 and B2 to be welded to each other can be accurately positioned relative to the table 590 at the positioning station 502. It is also possible to prevent the positioning stoppers 24 from interfering with the welding operation when the abutting surfaces of the blanks B1 and B2 are welded to each other at the welding station 504.

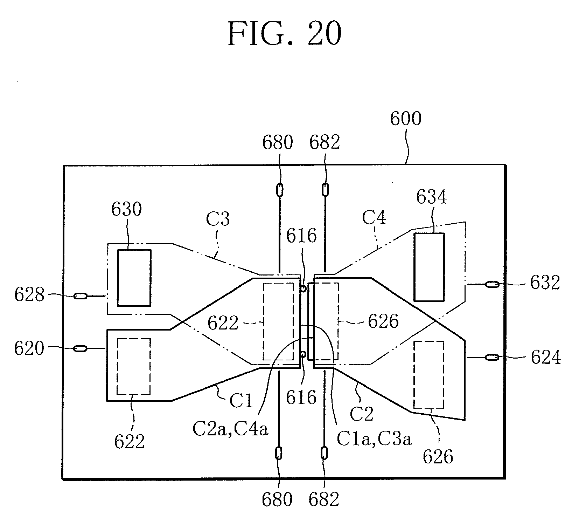

Still another embodiment will be now described with reference to FIG. 20. Compared with the foregoing embodiments, a table used in this embodiment is configured so as to be suitable not only for the process of positioning and welding the first and second blanks, but also for a process in which third and fourth blanks, of which basic shapes correspond to mirror-image forms of the first and second blanks, respectively, are butted against each other and welded together at their abutting surfaces.

Specifically, as illustrated in FIG. 20, the table 600 includes positioning stoppers 616 against which an abutting surface C1a of the first blank C1 can be butted, a first push member 620 for pushing the first blank C1 so that the abutting surface C1a of the first blank C1 may abut against the positioning stoppers 616, and two first magnet clamps 622 for fixing the first blank C1 on the table 600. The table 600 further includes a second push member 624 for pushing the second blank C2 so that an abutting surface C2a of the second blank C2 may abut against the abutting surface C1a of the first blank C1 fixed on the table 600, and two second magnet clamps 626 for fixing the second blank C2 on the table 600. Like the foregoing embodiments illustrated in FIGS. 12 to 19, the positioning stoppers and the first and second push members are driven by respective actuators, not shown. Furthermore, the table 600 is provided with guide members 680 for positioning the first blank C1 in the width direction, and guide members 682 for positioning the second blank C2 in the width direction. The guide members 680 and 682 can be moved by respective actuators, not shown, between the active position where the guide members 680 and 682 come into contact with the respective blanks C1 and C2, and the inactive position where the guide members 680 and 682 are located away from the respective active positions.

In addition, the table 600 is configured so as to be suited for a butting operation in which a third blank C3, of which the basic shape corresponds to a mirror-image form of the first blank C1, and a fourth blank C4, of which the basic shape corresponds to a mirror-image form of the second blank C2, are butted against each other. Specifically, the table 600 includes a push member 628 for pushing the third blank C3 so that an abutting surface C3a of the third blank C3 may abut against the positioning stoppers 616, and a magnet clamp 630 for fixing the third blank C3 on the table 600. Further, the table 600 includes a push member 632 for pushing the fourth blank C4 so that an abutting surface C4a of the fourth blank C4 may abut against the abutting surface C3a of the third blank C3, and a magnet clamp 634 for fixing the fourth blank C4 on the table 600. Thus, the third blank C3 is fixed on the table 600 by one of the first magnet clamps 622 and the magnet clamp 630, while the fourth blank C4 is fixed on the table 600 by one of the second magnet clamps 626 and the magnet clamp 634. The guide members 680 and 682 are used also for positioning the third and fourth blanks C3 and C4, respectively, in their width direction.

According to this embodiment, the table 600 can be used to position and fix not only the first and second blanks C1 and C2 but the third and fourth blanks C3 and C4, thus making it unnecessary to prepare a separate table exclusively for the third and fourth blanks. Accordingly, the time and labor required to replace the tables of the welding apparatus can be eliminated, making it possible to reduce cost as well. Especially, in this embodiment, the positioning stoppers 616 and the guide members 680 and 682 are used also for positioning the third and fourth blanks C3 and C4, and one of the first magnet clamps 622 and one of the second magnet clamps 626 are used for fixing the third and fourth blanks C3 and C4, respectively. It is therefore possible to minimize the number of magnet clamps that need to be additionally provided to position and fix the third and fourth blanks C3 and C4.

The following is a supplemental explanation of the aforementioned basic shapes corresponding to mirror-image forms. The expression "basic shapes corresponding to mirror-image forms" is used herein not to signify that the blanks whose basic shapes correspond to mirror-image forms of other blanks are strictly and exactly symmetrical with the other blanks in respect of all parts thereof. In the case of panels constituting the sides of an automotive vehicle body, for example, the left-hand side and the right-hand side are identical in basic shape but may partly differ from each other because of the difference in design or in parts attached to the left- or right-hand side only. Even in such cases, this embodiment is equally applicable, as will be clear from the above explanation. In the case of automobile panels, panels with different thicknesses are often butted against each other for welding, so that the welded panels have an obverse exposed side and a reverse hidden side. For this reason, the blanks C3 and C4 need to be positioned and fixed on the table 600 while maintaining their mirror-image forms, without being turned over, and be welded to each other.

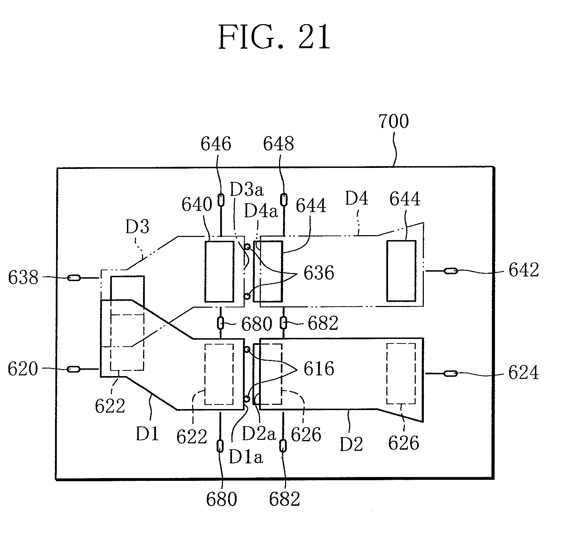

The embodiment illustrated in FIG. 20 may be modified in various ways so as to match the shapes of the blanks. For example, the table may be modified as illustrated in FIG. 21. The table 700 includes positioning stoppers 616 against which an abutting surface D1a of a first blank D1 is to be butted, a first push member 620 for pushing the first blank D1, two first magnet clamps 622 for fixing the first blank D1, a second push member 624 for pushing a second blank D2 so that an abutting surface D2a of the second blank D2 may abut against the abutting surface D1a of the first blank D1, two second magnet clamps 626 for fixing the second blank D2, and guide members 680 and 682 for positioning the first and second blanks D1 and D2, respectively, in their width direction. Further, in order that third and fourth blanks D3 and D4, of which the basic shapes correspond to mirror-image forms of the first and second blanks D1 and D2, respectively, may be positioned and fixed, the table 700 further includes positioning stoppers 636 against which an abutting surface D3a of the third blank D3 is to be butted, a push member 638 for pushing the third blank D3, a magnet clamp 640 for fixing the third blank D3, a push member 642 for pushing the fourth blank D4 so that an abutting surface D4a of the fourth blank D4 may abut against the abutting surface D3a of the third blank D3, a magnet clamp 644 for fixing the fourth blank D4, and guide members 646 and 648 for positioning the third and fourth blanks D3 and D4, respectively, in their width direction. Those two guide members 680 and 682 which are located in the center of the table 700 are configured so as to be movable upward from their illustrated positions, as viewed in the figure, so that the third and fourth blanks D3 and D4 can be positioned in their width direction.

Apart from the above modification, the embodiment may be modified in various other ways, for example, by suitably arranging the push members for pushing the first and second blanks and, if each of the first and second blanks is pushed by a plurality of push members, using some of the push members to push the third and fourth blanks as well so that blanks with various shapes may be appropriately handled.

While the various embodiments of the present invention have been described above, it is to be noted that the present invention is not limited to the above embodiments alone. For example, each of the foregoing embodiments may be provided with a member or members for preventing vertical displacement of the butted ends of the blanks so that, when the first and second blanks or the third and fourth blanks are butted against each other by the push members, one of the blanks may not run onto the other for some reason or other. Further, in the above embodiments, after the butt welding of the first and second blanks is completed, another blank may be welded to at least one of the first and second blanks by butt welding.

### Explanation of Reference Signs

- 2:: first positioning station
- 4:: first welding station
- 6:: cutting station
- 8:: second positioning station
- 10:: second welding station
- 12:: unloading station
- 18:: rotary platform
- 20, 20A, 20B:: table
- 24:: positioning stopper
- 26, 30, 34:: push member
- 28, 32, 36:: magnet clamp
- 56:: stopper actuator
- 58, 60, 92:: push actuator
- 62, 94:: welding device
- 72:: cutting device
- 502:: positioning station
- 504:: processing station
- 508:: table
- 540:: engaging member
- 560:: welding device
- 570:: welding head
- B1, C1, D1:: first blank
- B2, C2, D2:: second blank
- C3, D3:: third blank
- C4, D4:: fourth blank

## Claims

1. A welding apparatus for welding a first blank and a second blank to each other by butt welding to form a blank assembly, and then welding the blank assembly and a third blank to each other by butt welding, comprising:
a table on which the first, second and third blanks are to be fixed; and
a plurality of stations where the table is to be positioned,
wherein the plurality of stations include:
a first positioning station where the first and second blanks placed on the table are positioned by being butted against each other, and then fixed on the table,
a first welding station where the first and second blanks fixed on the table are welded together at abutting surfaces thereof, to form the blank assembly,
a cutting station where the blank assembly is subjected to cutting to form an abutting surface with a predetermined shape against which the third blank is to be butted,
a second positioning station where the third blank is positioned by being butted against the abutting surface of the blank assembly, and then fixed on the table, thus forming a blank aggregate, and
a second welding station where the blank assembly and the third blank forming the blank aggregate are welded together at the abutting surfaces thereof, to form a finished article.

2. The welding apparatus according to claim 1, wherein:
the first positioning station, the first welding station, the cutting station, the second positioning station and the second welding station are arranged in mentioned order,
the table is allotted to each of the stations, processes for positioning, welding and cutting the blanks are executed in parallel at the respective stations, and when the processes of the respective stations are completed, the tables are individually moved to next ones of the stations.

3. The welding apparatus according to claim 2, wherein, after the finished article is unloaded from the table, the table is moved to the first positioning station.

4. The welding apparatus according to claim 3, further comprising an unloading station arranged between the second welding station and the first positioning station, for unloading the finished article.

5. A welding method using the welding apparatus according to claim 1, comprising:
the step, executed at the first positioning station, of positioning and fixing the first blank on the table, positioning the second blank by butting the second blank against the first blank, and fixing the second blank on the table;
the step, executed at the first welding station, of welding the first and second blanks together at the abutting surfaces thereof to form the blank assembly;
the step, executed at the cutting station, of subjecting the blank assembly to cutting to form the abutting surface with the predetermined shape against which the third blank is to be butted;
the step, executed at the second positioning station, of positioning the third blank by butting the third blank against the abutting surface of the blank assembly, and fixing the third blank on the table, thus forming the blank aggregate; and
the step, executed at the second welding station, of welding the blank assembly and the third blank forming the blank aggregate at the abutting surfaces thereof, to form the finished article.

6. A welding apparatus comprising:
a plurality of tables for carrying thereon a plurality of blanks to be welded together;
a rotary platform on which the tables are arranged in a circle at an equal pitch; and
a plurality of stations arranged below the rotary platform and including a positioning station for positioning and fixing the blanks and a plurality of processing stations for processing the blanks,
wherein the positioning station and the plurality of processing stations are arranged at a pitch equal to the pitch at which the tables are arranged,
a process of the positioning station for fixing the blanks in position on the table and processes of the plurality of processing stations for processing the blanks are executed in parallel, and after the processes of the respective stations are completed, the rotary platform is rotated to move the tables successively to next ones of the stations so that the blanks may be processed at the next stations.

7. The welding apparatus according to claim 6, wherein:
the rotary platform has a hole in a center thereof such that the rotary platform is shaped like a doughnut as viewed in plan, and
each of the processing stations is provided with an outer post set up outward of the rotary platform, an inner post set up in the hole of the rotary platform, a guide member extending between the outer and inner posts, a slider movable along the guide member, and a laser head supported on the slider and capable of emitting a laser beam onto the blanks.

8. The welding apparatus according to claim 7,
wherein the laser head is one of a head movable in a vertical direction as well as in a direction intersecting with a moving direction of the slider, a head configured to weld the blanks, and a head configured to cut the blank.

9. The welding apparatus according to claim 6, wherein:
each of the tables includes a positioning stopper for positioning the blank by allowing the blank to come into contact therewith, a push member for pushing the blank so as to come into contact with the positioning stopper, and a fixing device for fixing the positioned blank on the table, and
the positioning station includes an actuator capable of engaging with the push member to drive the push member.

10. The welding apparatus according to claim 9, wherein:
the positioning station is provided with either one of a positioning station base capable of moving up and down under the table, and a stopper actuator capable of engaging with the positioning stopper to move the positioning stopper,
where the positioning station is provided with the positioning station base, the actuator is fixed on the positioning station base, when the positioning station base is in an elevated position, the actuator and the push member engage with each other, and when the positioning station base is in a lowered position, engagement between the actuator and the push member is released, and
where the positioning station is provided with the stopper actuator, the positioning stopper is movable between an active position in which the positioning stopper projects above the table to allow the blank to abut thereagainst, and a rest position in which the positioning stopper is lowered beneath an upper surface of the table.

11. The welding apparatus according to claim 6, further comprising an unloading station arranged generally side by side with the positioning station and the plurality of processing stations, for unloading the blanks on which the processes of the respective processing stations have been performed.

12. The welding apparatus according to claim 6, further comprising an additional positioning station arranged between the plurality of processing stations, for positioning and fixing a blank different from the blanks.

13. A welding apparatus for butting a first blank and a second blank against each other and welding the first and second blanks together at abutting surfaces thereof, comprising:
a table on which the first and second blanks are to be fixed; and
a plurality of stations where the table is to be positioned,
wherein the plurality of stations include:
a positioning station where the first and second blanks are positioned by being butted against each other, and then fixed on the table, and
a welding station where abutting surfaces of the first and second blanks on the table moved from the positioning station are subjected to laser welding by a welding device, and
wherein the table includes:
a positioning stopper movable between an active position in which the positioning stopper projects above the table to allow the abutting surface of the first blank to abut thereagainst, and a rest position in which the positioning stopper is lowered beneath an upper surface of the table,
a first push member for pushing the first blank so that the abutting surface of the first blank may abut against the positioning stopper in the active position,
a first magnet clamp arranged on the table, for attracting a lower surface of the first blank butted against the positioning stopper,
a second push member for pushing the second blank while the first blank is attracted to the first magnet clamp with the positioning stopper moved to the rest position, so that the abutting surface of the second blank may be butted against the abutting surface of the first blank, and
a second magnet clamp arranged on the table, for attracting a lower surface of the second blank butted against the first blank.

14. The welding apparatus according to claim 13,
wherein the welding device includes a laser head movable along the abutting surfaces of the first and second blanks and capable of emitting a laser beam onto the abutting surfaces.

15. The welding apparatus according to claim 13,
wherein one of the first and second magnet clamps includes a plurality of magnet clamps.

16. The welding apparatus according to claim 13, wherein, in place of the first and second blanks, a third blank whose basic shape corresponds to a mirror-image form of the first blank and a fourth blank whose basic shape corresponds to a mirror-image form of the second blank can be butted against each other and fixed on the table, and the welding device is capable of welding the third and fourth blanks together at abutting surfaces thereof.

17. The welding apparatus according to claim 16,
wherein one of the first and second magnet clamps provided on the table is capable of attracting part of the third or fourth blank, and the table is provided with a magnet clamp separate from the first and second magnet clamps and capable of attracting the third or fourth blank.

18. The welding apparatus according to claim 16,
wherein the abutting surface of the third blank is butted against one of the positioning stopper and an additional positioning stopper provided on the table.

19. The welding apparatus according to claim 18,
wherein the third blank is pushed by one of the first push member and an additional push member provided on the table so that the abutting surface of the third blank may be butted against one of the positioning stopper and the additional positioning stopper.

20. The welding apparatus according to claim 18,
wherein the fourth blank is pushed by one of the second push member and an additional push member provided on the table so that the abutting surface of the fourth blank may be butted against the abutting surface of the third blank.
